# EUROPEAN PATENT APPLICATION

(11) **EP 2 685 750 A1**
(43) Date of publication of application: **15.01.2014**
(21) Application number: 12305844.8
(22) Date of filing: 13.07.2012
(51) Int. Cl.: H04W 12/00

(54) **Process for providing a visual indication of the level of trust of an execution of an application to an user that uses said application on his mobile terminal**

(71) Applicant: Alcatel Lucent, 75007 Paris (FR)
(72) Inventor: Marquet, Bertrand, 91620 NOZAY (FR); Ansiaux, Arnaud, 91620 NOZAY (FR)
(74) Representative: Sayettat, Julien Christian

(57) **Abstract**

Process for providing a visual indication of the level of trust of an execution of an application (1) to an user that uses said application on his mobile terminal (2), said process providing for, upon the launching of said application on said terminal :
- monitoring at least one information about the execution context of said application ;
- calculating a level of trust according to said information ;
- displaying a visual indicator (8, 8a, 8b, 8c) on said terminal according to said level.

## Description

The invention relates to a process for providing a visual indication of the level of trust of an execution of an application to an user that uses said application on his mobile terminal, such as a supporting application for a mobile terminal that comprises means for implementing such a process.

According to a study of the society OVUM-RHK®, the number of smartphones and dedicated applications has increased dramatically, and goes on increasing, so that the market of smartphone would certainly double during the next five years to reach around 653 millions.

The applications are more and more used, even for critical operations such as e-banking, during which an end user can make financial transactions or any other bank operation directly from his smartphone. Moreover, E-health applications are more and more used on smartphones and also manage a lot of critical and private data. However, with such applications, users have generally neither indication nor assurance of the underlying security and privacy, and thus they cannot be sure of the reliability of said applications.

Some mobile web based applications, which are opened in a known manner by means of web browsers such that Internet Explorer® or Google Chrome®, provide to display a visual indicator, notably under the form of an icon in front of the URL address (for Uniform Resource Locator) of said application in the address bar of said browser. In particular, the visual indicator can be chosen to indicate to the user if the application uses or not a protocol for ensuring security of Internet exchanges, such as the SSL protocol (for Secure Sockets Layer) or the more recent TSL protocol (for Transport Layer Security), and thus the level of reliability of the execution of said application, so that the user can deduce if he can enter or not sensitive information on the interface of said application.

For example, the social network Facebook® is available, notably from mobile terminals, through a web based application, and a user of said application can configure it to encrypt all the communications between said application and the global server of Facebook®, such as with the TSL protocol and by using an Hyper Text Transfer Protocol (HTTP). Thus, when the security protocol is activated, the web browser displays a visual indicator in the form of a padlock near the URL address of the web based application.

However, the security indications given by the web browser is only based on information about the technical configuration of the application and such a browser is generally not adapted to evaluate the trust of the execution of an application according to contextual information about the user, such as the environment in which said user launched said application and/or the security of the private profile of said user.

Moreover, users of mobile terminals use less and less web based applications and prefer using dedicated mobile applications that are better adapted to the screen and the internal functionalities of their mobile terminals. Thus, new business models based on such applications and application stores have emerged these last years. Nevertheless, dedicated mobile applications are currently not adapted to provide their users with indication about the trust for executing said applications, so that said users can generally not be ensured that said applications are executed securely and trusty or not.

The invention aims to improve the prior art by proposing a process for providing to users of mobile terminal a visual indication of the level of trust of execution of applications, and notably dedicated mobile applications that said users launch on said terminal, so that said users can know the risks for their sensitive data to be stolen or altered.

For that purpose, and according to a first aspect, the invention relates to a process for providing a visual indication of the level of trust of an execution of an application to an user that uses said application on his mobile terminal, said process providing for, upon the launching of said application on said terminal:
- monitoring at least one information about the execution context of said application;
- calculating a level of trust according to said information;
- displaying a visual indicator on said terminal according to said level.

According to a second aspect, the invention relates to a supporting application for a mobile terminal, comprising:
- means for detecting the launching of an application on said terminal;
- means for monitoring at least one information about the execution context of said application;
- means for calculating a level of trust according to said information;
- means for displaying a visual indicator on said terminal according to said level.

Other aspects and advantages of the invention will become apparent in the following description made with reference to the appended figures, wherein:
- figure 1 represents schematically a mobile terminal comprising a supporting application that implements a process according to the invention;
- figure 2 represents in further details the visual indicator of the terminal of figure 1.

In relation to those figures, a process for providing a visual indication of the level of trust of an execution of an application 1 to an user that uses said application on his mobile terminal 2, such as a supporting application for a mobile terminal 2 comprising means for implementing such a process, are described below.

As represented, the mobile terminal 2 can be a smartphone with a tactile screen 3, the user of said mobile terminal launching dedicated applications 1 on said mobile terminal, such as for example an application for a social network, an application for e-banking or an e-health application. These launched applications 1 can be web based applications or dedicated mobile applications that the user can install on his mobile terminal 2.

Moreover, the mobile terminal 2 comprises a supporting application with means for implementing the process on at least one of those applications 1, so as to ensure the user of the reliability of the execution of said application.

In particular, the supporting application is independent of the application 1 to be supported. This supporting application can be initially installed on the mobile terminal 2 as a part of the operating system of said terminal. This application can also be installed later by the user on his mobile terminal 2, for example through an application store such as Apple Store® or Google Play Store®, or during a wireless contract subscription with a telephony operator.

Moreover, the supporting application is adapted to support several applications 1 in parallel, but provides a visual indication only for the active application 1 which is displayed on the screen 3 of the mobile terminal 2.

The process provides for, upon the launching of an application 1 on the mobile terminal 2, monitoring at least one information about the execution context of said application. To do so, the supporting application comprises means for detecting the launching of an application 1 on the mobile terminal 2 and means for monitoring such information upon such detection.

In particular, the process can be adapted to allow the user to choose the applications 1 he wants to be supported, notably the most sensitive applications such as e-banking applications or e-health application. To do so, as the user installs an application 1 on his mobile terminal 2, the process can provide for detecting said installation and for proposing to the user the support of said application upon said detection. Thus, the monitoring of execution context information of the application 1 would be triggered upon the launching of said application only if the user gives a positive response to the supporting proposition.

To do so, the means for detecting of the supporting application can be adapted for detecting the installation of an application 1 on the mobile terminal 2 and means for proposing to the user the support of said application upon said detection. For example, the means for proposing can be adapted to display on the screen 3 of the mobile terminal 2 a pop up window with a textual message for asking to the user if he wants the application 1 to be installed to be supported or not, said window further comprising two interactive "Yes" and "No" buttons, the user pressing on one of said button to respond. Thus, if the user presses the "Yes" button, the means for monitoring of the supporting application will be launched upon the next launching of the supported application 1.

In the case of a web based application, the process can also provide for detecting the first launching of said application on the mobile terminal 2 and for proposing the support of said application upon said detection. To do so, the means for detecting of the supporting application can be adapted for detecting the first launching of an application 1, the means for proposing being adapted for proposing to the user the support of said application upon such detection.

Moreover, the process can provide the user to choose the at least one information to be monitored upon a positive response of said user to the support proposition. To do so, the means for proposing of the supporting application are adapted to allow the user to make such a choice. For example, the means for proposing can be adapted to display on the screen 3 of the mobile terminal 2 a dedicated menu with a list of several propositions for execution context information, the user choosing among said list the information to be monitored, notably by checking the boxes of said information.

In particular, the process can provide for helping the user to make his choice, notably by proposing automatically to said user a set of predefined information to be monitored. To do so, the list of propositions can for example comprise information with boxes that are pre-checked, the user further checking other boxes for other information and/or clearing the boxes of information he is not interested in.

Moreover, the at least one monitored execution context information comprises technical information about the supported application 1 and/or contextual information about the user.

In particular, the technical information about the application can concern the security of the communications, notably about the eventual security protocol used in communications, such as the SSL protocol, the SSH protocol (for Secure Shell) or the IPSEC set of protocols (for Internet Protocol Security).

The technical information can also concern the topology of the mobile communication network 4 to which the mobile terminal 2 is connected, said topology concerning the standard and/or the protocol of said network, as for example the Wi-Fi® protocol and/or one of the LTE standards (for Long Term Evolution), or the access mode of said terminal to services of said network, such as the roaming mode or the handover mode.

The technical information can also concern the security credentials owned by the application 1 and/or the mobile terminal 2, such as a password, an encryption key or an authentication mark, the controlled memory access and/or the internal communication of the application with other ones.

Moreover, the contextual information about the user can concern the personal security profile and/or privacy aspects of said user, the geo-localization of said user and/or the time at which said user launches the application 1.

In particular, the execution context information concerns both technical information and contextual information about the user, which allows a more reliable evaluation of the level of trust of the execution of the application 1. Moreover, by selecting as much information to be monitored as possible for the means for monitoring, the user can benefit from a trust evaluation taking into account more technical and contextual aspects than usual security solutions that generally consider only the mobile communication security parameters.

For monitoring the execution context information, the process can notably receive such information from a local or remote trusted source. In particular, the process can provide for sending a request to an infrastructure device 6, 7 of the mobile communication network 4 to which the mobile terminal 2 is connected, as it is notably described in the patent application EP-1 993 240 of the society Alcatel-Lucent®.

To do so, the means for monitoring of the supporting application are adapted to send such a request to such an infrastructure device 6, 7, said device responding by sending back a notification comprising the requested information. In particular, such an infrastructure device 6, 7 can be solicited for information concerning the topology of the network 4 and/or the security profile and/or the privacy aspects of the user.

Moreover, the means for monitoring can be adapted to interact with a geo-localisation application 5 that is installed on the mobile terminal 2 or provided by a dedicated service of the network 4, such as a GPS application (for Global Positioning System), or other hardware or software systems, to obtain geographical coordinates as contextual information about the user.

The process further provides for calculating a level of trust according to the monitored execution context information. To do so, the supporting application comprises means for calculating such a level of trust. In particular, this calculation is done continuously, so that the user will be informed in real time of the security conditions for executing the supported application 1.

Thus, if the supported application 1 is in active mode and displayed on the screen 3 of the mobile terminal 2, the process provides for displaying a visual indicator 8 on said terminal according to the calculated level of trust. To do so, the supporting application comprises means for displaying such a visual indicator 8, said means being directly provided by the operating system of the mobile terminal 2 or by a dedicated service of said mobile terminal.

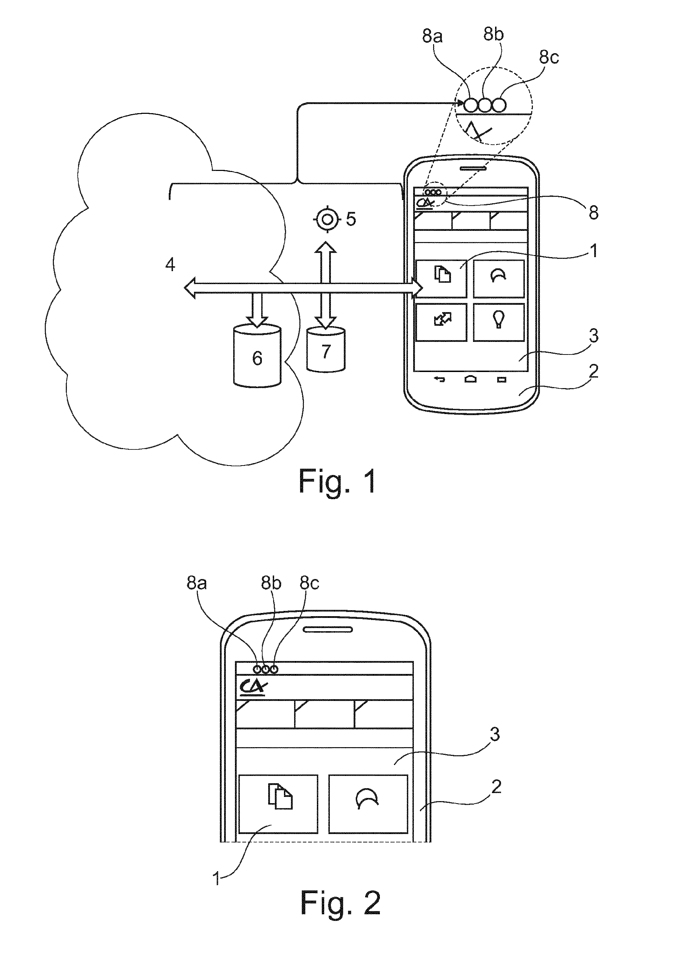

As represented on figure 1 and notably on figure 2, the means for displaying can be adapted to display a visual indicator 8 under the form of a traffic light comprising three coloured pellets 8a, 8b, 8c that are illuminated according to the level of trust, the green pellet 8a corresponding to a total security situation wherein every technical and contextual aspects are secured and the application 1 can be executed with trust, the orange pellet 8b corresponding to a limited security situation wherein some aspects are not as expected without impacting seriously the reliability of the execution of the application 1, and the red pellet 8c corresponding to a high risk situation wherein the reliability of the execution of the application 1 is seriously impacted.

To do so, the means for calculating can being adapted, for example, for categorizing the level of trust by comparing it to three value ranges, the range with greatest values corresponding to a high level of trust and the range with lowest values corresponding to a low level of trust, the means for displaying illuminating the corresponding pellet 8a, 8b, 8c of the visual indicator 8 according to said categorization.

Moreover, the visual indicator 8 can be interactive, so that the user can press it to get more details about the level of trust, and thus to decide by himself if he wants to continue, stop or postpone the execution of the application 1, notably in the case of a limited security situation. To do so, the means for displaying can be adapted to display a window with a list of such details as the user presses on the visual indicator 8.

For example, the details can indicate that the risk is due to the geo-localisation of the user. Indeed, as the user launches an application 1 where being in a public place with a lot of people, there exists an important risk for critical data of said user to be stolen, so that the visual indicator 8 would have its orange pellet 8b, even its red pellet 8c illuminated.

In particular, in the case of a high risk situation, the means for displaying can be adapted for displaying automatically on the screen 3 of the mobile terminal 2 a pop-up window with a textual message for proposing the user to stop or postpone the execution of the application 1.

The process and the supporting application of the invention will be of great interest to many users for which security and privacy are main concerns when said users access to Internet, cloud services or big data plateforms.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for providing a visual indication of the level of trust of an execution of an application (1) to an user that uses said application on his mobile terminal (2), said process providing for, upon the launching of said application on said terminal:
- monitoring at least one information about the execution context of said application;
- calculating a level of trust according to said information;
- displaying a visual indicator (8, 8a, 8b, 8c) on said terminal according to said level.

2. Process according to claim 1, **characterized in that** it provides for detecting the installation or the first launching of the application (1) on the mobile terminal (2) and for proposing to the user the support of said application upon said detection, the monitoring further being triggered upon the launching of said application if said user gives a positive response to said proposition.

3. Process according to claim 2, **characterized in that** it provides the user to choose the at least one information to be monitored upon a positive response of said user to the support proposition.

4. Process according to any of claims 1 to 3, **characterized in that** the at least one monitored information comprises technical configuration information about the application (1) and/or contextual information about the user.

5. Process according to any of claims 1 to 4, **characterized in that** it provides to monitor information by sending a request to an infrastructure device (6, 7) of a network (4) to which the mobile terminal (2) is connected.

6. Process according to any of claims 1 to 5, **characterized in that** the visual indicator (8, 8a, 8b, 8c) is under the form of a traffic light.

7. Supporting application for a mobile terminal (2), comprising:
- means for detecting the launching of an application (1) on said terminal;
- means for monitoring at least one information about the execution context of said application;
- means for calculating a level of trust according to said information;
- means for displaying a visual indicator (8, 8a, 8b, 8c) on said terminal according to said level.

8. Supporting application according to claim 7, **characterized in that** the means for detecting are adapted for detecting the installation or the first launching of an application (1) on the mobile terminal (2) and means for proposing to the user the support of said application upon said detection, the means for monitoring further being triggered upon the launching of said application if said user gives a positive response to said proposition.

9. Supporting application according to claim 8, **characterized in that** the means for proposing are adapted to allow the user to choose the at least one information to be monitored upon a positive response of said user to the support proposition.

10. Supporting application according to any of claims 7 to 9, **characterized in that** the at least one monitored information comprises technical configuration information about the application (1) and/or contextual information about the user.

11. Supporting application according to any of claims 7 to 10, **characterized in that** the means for monitoring are adapted to send a request to an infrastructure device (6, 7) of a network (4) to which the mobile terminal (2) is connected.

12. Supporting application according to any of claims 7 to 11, **characterized in that** the means for displaying are adapted to display a visual indicator (8, 8a, 8b, 8c) under the form of a traffic light.
